# EUROPEAN PATENT SPECIFICATION

(11) **EP 0 739 308 B1**
(45) Date of publication and mention of the grant of the patent: **08.09.1999**
(21) Application number: 94924287.9
(22) Date of filing: 23.07.1994
(51) Int. Cl.: C01B 39/48, B01J 29/70

(54) **PROCESS FOR THE MANUFACTURE OF A ZEOLITE**
VERFAHREN ZUR HERSTELLUNG EINES ZEOLITHS
PROCEDE DE FABRICATION D'UN ZEOLITHE

(30) Priority: 23.07.1993 WO PCT/EP93/01972; 31.03.1994 GB 9406433
(43) Date of publication of application: 30.10.1996
(73) Proprietor: EXXON CHEMICAL PATENTS INC., Linden New Jersey 07036 (US)
(72) Inventor: BUSKENS, Philip, Luc, B-3001 Heverlee (BE); MARTENS, Luc, Roger, B-1860 Meise (BE); MATHYS, Georges, Marie, Karel, B-3360 Bierbeek (BE)
(74) Representative: White, Nicholas John, Dr.
(86) International application number: EP9402458
(87) International publication number: WO9503250

(56) References cited:
- EP-A- 0 158 491
- WO-A-93/08125
- US-A- 3 308 069

## Description

This invention relates to a process for the manufacture of a zeolite, especially to one suitable for use as an absorbent or catalyst, to the zeolite produced by the process, and to organic reactions, especially oxidations of hydrocarbons, catalysed thereby.

Zeolite Beta is a large pore, high silica zeolite material first described in 1967, in U.S. Patent No. 3308069. Because of its large pore size, based on 12-membered rings, it is useful as a catalyst for reactions involving larger organic molecules than can be accommodated in the pore of the more commonly used ZSM-5, 10-membered ring, zeolite catalysts.

The previously proposed processes for the manufacture of the catalyst have all employed synthesis mixtures containing cations of an alkali metal; indeed, in an article by Camblor et al, Zeolites, 1991, 202 to 210, it is suggested that the presence of alkali metal cations is essential for the formation of the zeolite. Certainly, in the existing processes yields in the absence of alkali metal cations are very low.

The presence of alkali metal cations in the synthesis mixture is, however, disadvantageous, especially when the zeolite is to be used as an acidic catalyst, since any necessary post-calcination treatment is made longer by the presence of substantial alkali metal concentrations.

The present invention is based on the observation that if ethene is present in contact with a Beta-forming synthesis mixture during the hydrothermal treatment Beta zeolite is obtained in good yields.

The present invention accordingly provides in a first aspect a process for the manufacture of a Beta zeolite in which at least a part of a hydrothermal treatment of a Beta zeolite-forming synthesis mixture is carried out under an ethene-containing atmosphere at a pressure of at least 20 bar and advantageously under an ethene partial pressure of at least 5 bar.

In a second aspect, the invention provides a process for the manufacture of a Beta zeolite in which at least a part of a hydrothermal treatment of a Beta zeolite forming synthesis mixture is carried out in the presence of at least 0.1 mole of ethene per mole of tetraethylammonium cations. Advantageously, the mole ratio of ethene:tetraethylammonium is in the range 0.1 to 1:1.

As a Beta forming synthesis mixture, there is typically used a mixture comprising a source of silicon, a source of aluminium, water, and a source of tetraethylammonium cations. The aluminium may, however, be replaced wholly or in part by other cations, for example gallium, boron, or iron.

The synthesis mixture is advantageously substantially free from alkali metal cations; by substantially free is meant the absence of more alkali metal than is inevitably present in commercial supplies of the essential components. If alkali metal ions, e.g., sodium or potassium ions, are present, they are advantageously present in a molar proportion of SiO₂:M⁺ of 1: at most 0.5.

Advantageously, the synthesis mixture has a molar composition within the following ranges:
SiO₂(1); Al₂O₃(0.0005 to 0.1); H₂O(10 to 100) and TEAOH (0.01 to 1).

Advantageously, the Si:Al molar ratio is within the range of from 50 to 200:1.

Preferred sources of the components are: for silicon, colloidal silica, advantageously a colloidal silica substantially free from alkali metal cations, or a tetraalkylammonium orthosilicate; and for aluminium, aluminium powder. If the aluminium is replaced by other cations, suitable sources are, for example; gallium nitrate or oxide, boric acid or an alkoxide thereof, e.g., B(OC₂H₅)₃, or ferric nitrate. The tetraethyl ammonium cations are advantageously provided by TEAOH.

If desired or required to assist dissolution of any reactants, hydrogen peroxide may be present in the synthesis mixture.

Advantageously, especially if it contains hydrogen peroxide, the synthesis mixture is aged between its formation and the hydrothermal treatment. Ageing may be carried out at room temperature or at elevated temperatures, for example at from 60 to 90°C, advantageously about 70°C, the ageing time being from 2 to 24 hours, depending inversely on the temperature. A preferred ageing treatment comprises initial room temperature ageing for from 12 to 18 hours, followed by elevated temperature ageing, e.g., at 70°C, for from 2 to 4 hours.

Elevated temperature ageing also causes evaporation of water from the synthesis mixture, thereby producing a synthesis gel of a concentration advantageous for hydrothermal treatment. If desired, or required, the aged gel may be diluted before treatment, e.g., with ethanol. If ethanol is added, it is advantageously present in the synthesis mixture subjected to hydrothermal treatment in a proportion of at most 2 moles per mole of SiO₂.

The synthesis mixture, preferably aged, is advantageously subjected to hydrothermal treatment at a temperature within the range of from 120°C to 200°C, preferably from 130°C to 150°C, under the pressure regime as indicated above, advantageously for a time in the range of from 1 hour to 30 days, preferably from 6 days to 15 days, until crystals are formed. Hydrothermal treatment is advantageously effected in an autoclave.

While not wishing to be bound by any theory, it is believed that under the conditions prevailing under the hydrothermal treatment tetraethylammonium ions decompose and are unavailable to form a template effective in zeolite formation. By carrying out the treatment in the presence of ethene, a decomposition product, the equilibrium of the decomposition reaction is displaced and more tetraethylammonium ions remain available to act as templates.

In any event, by carrying out at least part of the hydrothermal treatment in the presence of ethene, a higher zeolite yield may be obtained or a lower proportion of tetraethylammonium ions may be included in the synthesis mixture. Advantageously, ethene is present in the reaction vessel from the commencement of the hydrothermal treatment.

Advantageously, the ethene partial pressure is at least 5 bar, preferably at least 20 bar, and most preferably at least 30 bar, for at least a part of the period of hydrothermal treatment. Also, advantageously, the total pressure is at least 30 bar, and preferably at least 40 bar. Advantageously, the ethene partial pressure is at least 80%, preferably at least 90%, of the total pressure.

After crystallization has taken place, the synthesis mixture is cooled, and the crystals are separated from the mother liquor, washed and dried.

To eliminate the organic base from the crystals, they are advantageously then heated to from 200 to 600°C, preferably about 550°C, in air, for from 1 to 72 hours, preferably about 12 hours.

The resulting calcined product may either be used as such or subjected to further treatment e.g., by acid, for example, HCl, or by cation exchange, e.g., to introduce nickel. The product may be post-treated, as by steaming.

The Beta zeolite produced by the process of the invention may be highly crystalline and has the typical Beta zeolite IR absorption bands at 575 and 525 cm⁻¹ and X-ray diffraction spectrum.

The zeolite produced according to the invention is useful as a catalyst in all reactions where an acidic catalyst is effective, especially in the production and conversion of organic compounds, for example cracking, hydrocracking, dewaxing, isomerization (including e.g., olefin bond isomerization and skeletal isomerization e.g., of butene), oligomerization, polymerization, alkylation, dealkylation, hydrogenation, dehydrogenation, dehydration, cyclization and aromatization. The present invention therefore provides a process for the production or conversion of an organic compound comprising the use of a zeolite catalyst prepared in accordance with the invention. The zeolite can also be used (either as initially prepared or in a modified form) in a selective adsorption process e.g., a separation or purification.

The following Example illustrates the invention.

### Example 1

256 g of distilled H₂O were cooled to 5°C, and 103 ml of H₂O₂ (35 wt% in H₂O) were added. The resulting solution was stirred for 3 hours at 5°C.

The aluminium source, 0.3859 g Al powder, and 366 g of the template, TEAOH (40% in H₂O), were combined in a beaker, covered to prevent evaporation, and heated at 80°C for 2 hours. After dissolution of aluminium, 183 ml of distilled water were added. The resulting solution was cooled to 5°C.

The two solutions were mixed, and the resulting solution stirred at 5°C for another hour. Afterwards, 61 g of colloidal silica (Aerosil, 200 m²/g) are added, and stirred for 18 hours at room temperature. A gel with the following molar composition is thus obtained;
SiO₂ : 1; TEA₂O : 0.49; Al₂O₃ : 0.007; H₂O : 28.

Subsequently, the solution was kept at 70°C for 2 hours, and then allowed to cool to room temperature. Before transferring the solution to a 1000 ml, ptfe-lined, stainless steel autoclave, 61 ml of ethanol were added. The synthesis mixture occupied about 95% of the volume. Gas phase analysis showed a high ethene content in the head-space.

The autoclave was kept at 140°C without agitation. After 11 days, pressure had risen to 50 bar. The crystals were separated from the mother liquor and washed by centrifugation at 13,000 rpm. After drying at 60°C, the organic template was removed from the zeolite pores by calcination at 550°C in air for 12 hours.

X-ray diffraction study of the product before calcination showed that it had pure Zeolite Beta crystal structure. The yield, expressed as the weight of solids after calcination as a proportion of the total of SiO₂ and Al₂O₃ in the gel, was 42%. The Si:Al ratio (²⁷Al-NMR) was 36:1.

## Claims

1. A process for the manufacture of a Beta zeolite in which at least a part of a hydrothermal treatment of a Beta zeolite-forming synthesis mixture is carried out under an ethene-containing atmosphere at a pressure of at least 20 bar.

2. A process as claimed in claim 1, wherein at least part of the hydrothermal treatment is carried out under an ethene partial pressure of at least 5 bar.

3. A process as claimed in claim 2, wherein the ethene partial pressure is at least 20 bar.

4. A process as claimed in claim 2, wherein the ethene partial pressure is at least 30 bar.

5. A process as claimed in any one of claims 1 to 3, carried out at a total pressure of at least 30 bar.

6. A process for the manufacture of a Beta zeolite in which at least a part of a hydrothermal treatment of Beta forming synthesis mixture is carried out in the presence of at least 0.1 mole of ethene per mole of tetraethylammonium cations.

7. A process as claimed in claim 6, wherein the mole ratio of ethene:tetraethylammonium is in the range 0.1 to 1:1.

8. A process as claimed in any one of claims 1 to 7, wherein the synthesis mixture comprises water, a source of silicon, a source of aluminium, and a source of tetraethylammonium ions.

9. A process as claimed in claim 8, wherein the molar composition of the synthesis mixture is within the following ranges:
SiO₂ (1); Al₂O₃ (0.0005 to 0.1); H₂O (10 to 100); TEAOH (0.01 to 1).

10. A process as claimed in any one of claims 1 to 9, wherein the synthesis mixture contains colloidal silica.

11. A process as claimed in claim 10, wherein the colloidal silica is substantially alkali metal free.

12. A process as claimed in any one of claims 1 to 9, wherein the synthesis mixture contains a tetraalkylorthosilicate.

13. A process as claimed in any one of claims 1 to 12, wherein the synthesis mixture, at least initially, contains hydrogen peroxide.

14. A process as claimed in any one of claims 1 to 13, wherein the synthesis mixture is aged between its formation and the hydrothermal treatment.

15. A process as claimed in claim 14, wherein at least part of the ageing is carried out at room temperature.

16. A process as claimed in claim 14 or claim 15, wherein at least part of the ageing is carried out at an elevated temperature.

17. A process as claimed in any one of claims 1 to 16, wherein the synthesis mixture subjected to hydrothermal treatment contains ethanol, advantageously in a proportion of at most 2 moles per mole of SiO₂.

18. A process as claimed in any one of claims 1 to 17, wherein hydrothermal treatment is carried out at a temperature within the range of from 120°C to 200°C.

19. A process as claimed in any one of claims 1 to 18, wherein hydrothermal treatment is carried out for from 1 hour to 30 days.

20. A process as claimed in any one of claims 1 to 19, wherein after hydrothermal treatment the resulting crystals are recovered and heated in air at from 200 to 600°C, for from 1 to 72 hours.

21. A process as claimed in claim 20, wherein the calcined product is treated with an acid or a base, or is steamed.

22. The use of an ethene-containing atmosphere during hydrothermal treatment of a synthesis mixture to improve the yield of Beta zeolite.

## Patentansprüche

1. Verfahren zur Herstellung von β-Zeolith, bei dem mindestens ein Teil einer Hydrothermalbehandlung einer β-Zeolith bildenden Synthesemischung unter einer Ethen enthaltenden Atmosphäre bei einem Druck von mindestens 20 bar durchgeführt wird.

2. Verfahren nach Anspruch 1, bei dem mindestens ein Teil der Hydrothermalbehandlung unter einem Ethen-Partialdruck von mindestens 5 bar durchgeführt wird.

3. Verfahren nach Anspruch 2, bei dem der Ethen-Partialdruck mindestens 20 bar beträgt.

4. Verfahren nach Anspruch 2, bei dem der Ethen-Partialdruck mindestens 30 bar beträgt.

5. Verfahren nach einem der Ansprüche 1 bis 3, das bei einem Gesamtdruck von mindestens 30 bar durchgeführt wird.

6. Verfahren zur Herstellung von β-Zeolith, bei dem mindestens ein Teil einer Hydrothermalbehandlung von β-Zeolith bildender Synthesemischung in Gegenwart von mindestens 0,1 Mol Ethen je Mol Tetraethylammoniumkationen durchgeführt wird.

7. Verfahren nach Anspruch 6, bei dem das Molverhältnis von Ethen:Tetraethylammonium im Bereich von 0,1 bis 1:1 liegt.

8. Verfahren nach einem der Ansprüche 1 bis 7, bei dem die Synthesemischung Wasser, eine Quelle für Silicium, eine Quelle für Aluminium und eine Quelle für Tetraethylammoniumionen umfaßt.

9. Verfahren nach Anspruch 8, bei dem die Molzusammensetzung der Synthesemischung innerhalb der folgenden Bereiche liegt: SiO₂(1); Al₂O₃ (0,0005 bis 0,1); H₂O (10 bis 100), TEAOH (0,01 bis 1).

10. Verfahren nach einem der Ansprüche 1 bis 9, bei dem die Synthesemischung kolloidales Siliciumdioxid enthält.

11. Verfahren nach Anspruch 10, bei dem das kolloidale Siliciumdioxid im wesentlichen alkalimetallfrei ist.

12. Verfahren nach einem der Ansprüche 1 bis 9, bei dem die Synthesemischung ein Tetraalkylorthosilikat enthält.

13. Verfahren nach einem der Ansprüche 1 bis 12, bei dem die Synthesemischung mindestens am Anfang Wasserstoffperoxid enthält.

14. Verfahren nach einem der Ansprüche 1 bis 13, bei dem die Synthesemischung zwischen ihrer Bildung und der Hydrothermalbehandlung gealtert wird.

15. Verfahren nach Anspruch 14, bei dem mindestens ein Teil des Alterns bei Raumtemperatur durchgeführt wird.

16. Verfahren nach Anspruch 14 oder Anspruch 15, bei dem mindestens ein Teil des Alterns bei erhöhter Temperatur durchgeführt wird.

17. Verfahren nach einem der Ansprüche 1 bis 16, bei dem die Synthesemischung, die Hydrothermalbehandlung ausgesetzt wird, Ethanol enthält, vorteilhaft in einem Anteil von höchstens 2 Mol je Mol SiO₂.

18. Verfahren nach einem der Ansprüche 1 bis 17, bei dem die Hydrothermalbehandlung bei einer Temperatur im Bereich von 120°C bis 200°C durchgeführt wird.

19. Verfahren nach einem der Ansprüche 1 bis 18, bei dem die Hydrothermalbehandlung 1 h bis 30 Tage durchgeführt wird.

20. Verfahren noch einem der Ansprüche 1 bis 19, bei dem nach der Hydrothermalbehandlung die resultierenden Kristalle gewonnen und 1 bis 72 h in Luft auf 200 bis 600°C erwärmt werden.

21. Verfahren nach Anspruch 20, bei dem das calcinierte Produkt mit einer Säure oder Rase behandelt wird oder dampfbehandelt wird.

22. Verwendung einer Ethen enthaltenden Atmosphäre während der Hydrothermalbehandlung einer Synthesemischung, um die Ausbeute an β-Zeolith zu verbessern.

## Revendications

1. Procédé pour la production d'une zéolite bêta, dans lequel au moins une partie d'un traitement hydrothermique d'un mélange de synthèse de formation de zéolite bêta est effectuée sous une atmosphère contenant de l'éthène à une pression d'au moins 20 bars.

2. Procédé suivant la revendication 1, dans lequel au moins une partie du traitement hydrothermique est effectuée sous une pression partielle d'éthène d'au moins 5 bars.

3. Procédé suivant la revendication 2, dans lequel la pression partielle d'éthène est d'au moins 20 bars.

4. Procédé suivant la revendication 2, dans lequel la pression partielle d'éthène est d'au moins 30 bars.

5. Procédé suivant l'une quelconque des revendications 1 à 3, mis en oeuvre à une pression totale d'au moins 30 bars.

6. Procédé pour la production d'une zéolite bêta, dans lequel au moins une partie d'un traitement hydrothermique d'un mélange de synthèse de formation de zéolite bêta est effectuée en présence d'au moins 0,1 mole d'éthène par mole de cations tétraéthylammonium.

7. Procédé suivant la revendication 6, dans lequel le rapport molaire éthène:tétraéthylammonium est compris dans l'intervalle de 0,1 à 1:1.

8. Procédé suivant l'une quelconque des revendications 1 à 7, dans lequel le mélange de synthèse comprend de l'eau, une source de silicium, une source d'aluminium et une source d'ions tétraéthylammonium.

9. Procédé suivant la revendication 8, dans lequel la composition molaire du mélange de synthèse est comprise dans les intervalles suivants :
SiO₂ (1) ; Al₂O₃ (0,0005 à 0,1) ; H₂O (10 à 100) ; TEAOH (0,01 à 1).

10. Procédé suivant l'une quelconque des revendications 1 à 9, dans lequel le mélange de synthèse contient de la silice colloïdale.

11. Procédé suivant la revendication 10, dans lequel la silice colloïdale est pratiquement dépourvue de métaux alcalins.

12. Procédé suivant l'une quelconque des revendications 1 à 9, dans lequel le mélange de synthèse contient un ortho-silicate de tétra-alkyle.

13. Procédé suivant l'une quelconque des revendications 1 à 12, dans lequel le mélange de synthèse, au moins initialement, contient du peroxyde d'hydrogène.

14. Procédé suivant l'une quelconque des revendications 1 à 13, dans lequel le mélange de synthèse est soumis à un vieillissement entre sa formation et le traitement hydrothermique.

15. Procédé suivant la revendication 14, dans lequel au moins une partie du vieillissement est effectuée à température ambiante.

16. Procédé suivant la revendication 14 ou la revendication 15, dans lequel au moins une partie du vieillissement est effectuée à une température élevée.

17. Procédé suivant l'une quelconque des revendications 1 à 16, dans lequel le mélange de synthèse soumis au traitement hydrothermique contient de l'éthanol, avantageusement en une proportion d'au plus 2 moles par mole de SiO₂.

18. Procédé suivant l'une quelconque des revendications 1 à 17, dans lequel le traitement hydrothermique est effectué à une température comprise dans l'intervalle de 120°C à 200°C.

19. Procédé suivant l'une quelconque des revendications 1 à 18, dans lequel le traitement hydrothermique est effectué pendant un temps de 1 heure à 30 jours.

20. Procédé suivant l'une quelconque des revendications 1 à 19, dans lequel, après le traitement hydrothermique, les cristaux résultants sont recueillis et chauffés dans de l'air à une température comprise dans l'intervalle de 200 à 600°C pendant un temps de 1 à 72 heures.

21. Procédé suivant la revendication 20, dans lequel le produit calciné est traité avec un acide ou une base ou est traité à la vapeur d'eau.

22. Utilisation d'une atmosphère contenant de l'éthène au cours du traitement hydrothermique d'un mélange de synthèse pour améliorer le rendement en zéolite bêta.
